# EUROPEAN PATENT APPLICATION

(11) **EP 1 591 604 A2**
(43) Date of publication of application: **02.11.2005**
(21) Application number: 05102699.5
(22) Date of filing: 06.04.2005
(51) Int. Cl.: E04F 19/08, E06B 7/30

(54) **Door for closing inspection service cabinets or boxes in buildings or on building sites**

(30) Priority: 20.04.2004 IT BO20040039 U
(71) Applicant: EUR.EX S.r.l., 47899 Serravalle (SM)
(72) Inventor: Santi, Emiliano, 47899, SERRAVALLE (SM)
(74) Representative: Porsia, Dino

(57) **Abstract**

During formation of the door (S) by means of plastic injection moulding, the door is provided with one or more windows (1) which have any suitable shape and are designed such that they may be closed, even at the time of mounting of the door, by snap-engaging special inserts which, depending on the requirements, may consist, for example, of grilles (7) which can be directed so that the slats are always able to prevent the entry of water through them, or closed inserts (8), preferably made of transparent material, for viewing for example counters, remote control switches, relays or other means which are situated inside the box and are thus visible from the outside without having to open the door (S).

## Description

The invention relates to doors made of plastic for closing inspection cabinets or wall boxes intended, for example, to contain the junctions of electricity, telephone, water or gas mains used in buildings or on building sites, which doors are of the so-called "ambidextrous" type in that, depending on the requirements, they must be able to be positioned equally well with the opening hinges on the right or on the left, for example as described in documents EP 1 398 439 A2 and EP 1 505 704 A2 to which extensive reference will be made. In these documents the doors are provided, integrally and at a short distance from the horizontal sides, with ventilation grilles having the slats inclined transversely and mutually converging outwards so that, however the door is arranged, with the hinges on the right or on the left, the upper grille always has the slats inclined, from the top downwards, towards the outside and therefore in the best condition for preventing entry of rain water into the box. The bottom grille, however, has the slats always inclined, from the top downwards, towards the inside of the box and therefore in a condition not suitable for preventing entry of the rain water. In order to overcome this drawback and achieve other objects which otherwise would not be possible, the invention envisages forming on the door, at the time of moulding, one or more windows which have any suitable shape, for example a rectangular shape, and are designed such that they may be closed, directly by the user at the time of mounting, by snap-engaging inserts which, depending on the requirements, may consist for example of grilles which can be directed so that the slats are always able to prevent the entry of water through them or closed inserts made for example of transparent material, for viewing for example counters, remote control switches, relays or other devices which are situated inside the box and are thus visible from the outside without having to open the door. During the practical design of this solution it was ensured that each insert could be mounted inside its own window with ease, in a very secure and vandal-proof manner, so that it cannot be removed from the outside but may instead be easily removed from the inside of the door.

These and other characteristic features of the invention and the advantages arising therefrom will emerge more clearly from the following description provided with reference to the figures of the accompanying drawings in which:
- Fig. 1 is an elevation view from the outer side of a door of the ambidextrous type, with windows able to be closed by snap-engaging respective inserts;
- Figs. 2 and 3 show, on a larger scale and therefore with greater clarity of detail, one of the windows of the door according to Figure 1, seen respectively from the outer side and from the inner side;
- Figs. 4 and 5 show, from the outer side, the two different types of inserts supplied with the door;
- Fig. 6 shows the same door as in Figure 1 with the windows closed by corresponding inserts;
- Fig. 7 shows a front elevation view, on a larger scale, of one of the male joints provided on the perimeter of a window of the door, viewed in the direction indicated by the arrow K in Figures 1 and 2;
- Fig. 8 shows further details of the joint according to Figure 7, cross-sectioned along the line VIII-VIII;
- Fig. 9 shows a front elevation view, on a larger scale, of one of the female joints provided on the perimeter of one of the inserts according to Figures 4 and 5, viewed in the direction indicated by the arrow H;
- Fig. 10 shows the same joint according to Figure 9 cross-sectioned along the line X-X;
- Figs. 11 and 12 show the joining parts according to Figures 8 and 10, respectively in the condition where an insert is being positioned inside a window of the door and in the condition where engagement of the insert inside the window has been completed.

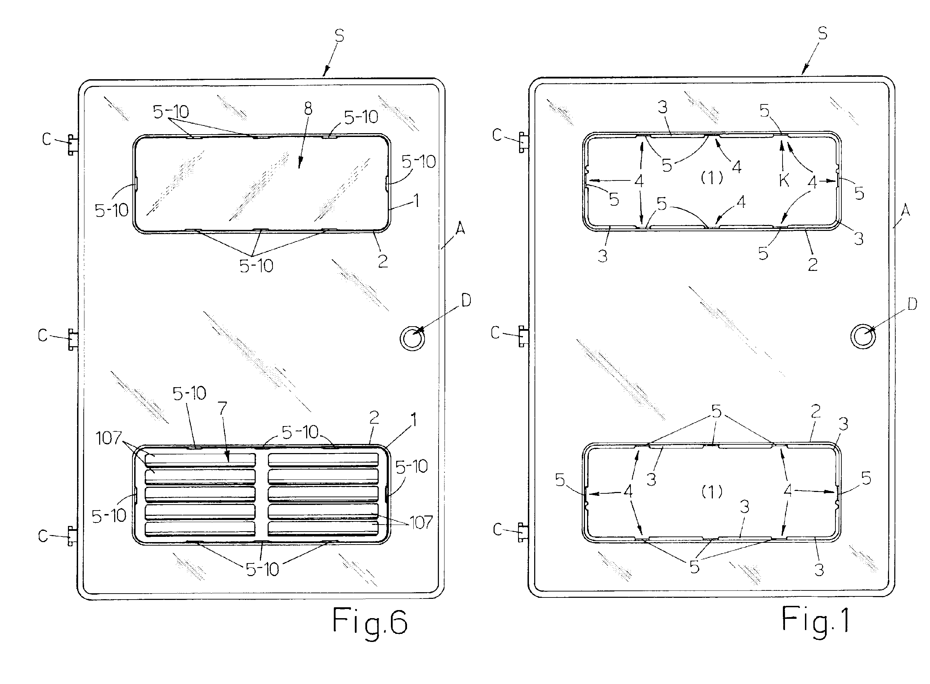

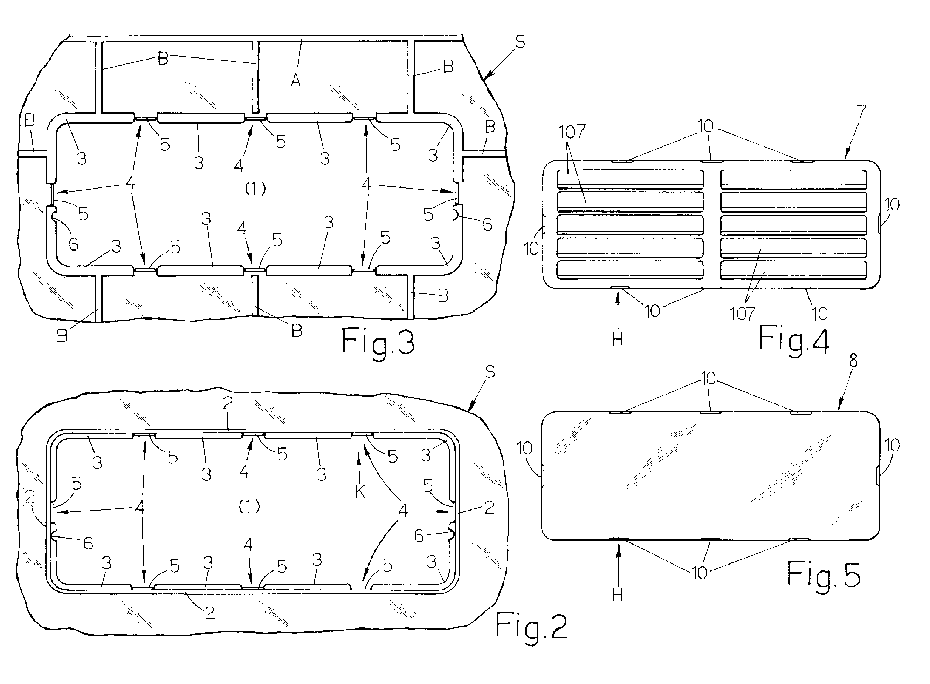

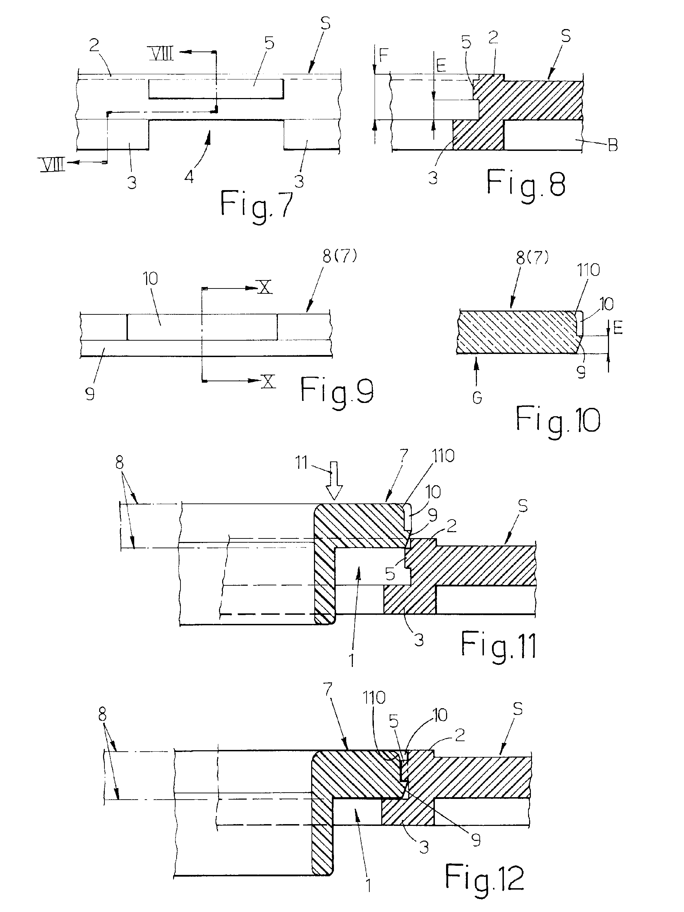

In Figures 1, 2 and 3, S denotes the door made by means of plastic injection moulding, for example having a rectangular shape, with rounded corners, provided at the front and at the rear with a small raised perimetral rim A reinforced at the rear by horizontal and vertical raised ribs B coplanar with the rear perimetral rim, and provided on one vertical side with the hinging lugs C symmetrically spaced and on the other side, in a middle position, with the seat D for receiving the closing means which, like the hinges C, are not considered here in detail since they are outside the scope necessary for understanding the invention. In the example described here (see below), the door S has been provided with a pair of windows 1 having the same shape, the same dimensions and the same functional characteristics, for example a rectangular shape, with the corners suitably rounded, and positioned centred, at a short distance from the horizontal sides of the door and parallel to them. With reference also to the details in Figures 2, 3 and 7, 8, it can be seen that each window 1 is circumscribed on the front side of the door by a small and continuous raised rim 2 and on the rear side the same window is circumscribed by a wider rim 3 which partly projects inside the said window 1 so as to act as a support for the insert later inserted in the said window and which, as can be seen in the detail according to Figures 3 and 8, is coplanar with and joined to the rear ribs B of the door. Unlike the rib 2, the rib 3 is not continuous and has small gaps 4 of the same length in the centre of the short sides and the long sides which also have similar gaps in zones symmetrically spaced from the central gap. The gaps 4 have, for example, a length of about 10-15 mm, for example about 12 mm. In the example in question the long sides of the rim 3 are provided with three gaps 4 spaced for example from each other at an interval of about 50-52 mm. The gaps 4 are provided in order to allow through the parts of the mould which form on the internal perimeter of each window 1, small parallelepiped-shaped reliefs 5 which are parallel to the rims 2 and 3 and have the same length as the said gaps 4 and the outer side of which is substantially coplanar with the outer side of the door S, while their side directed towards the rear rim 3 is suitably spaced from this rim, as indicated by E in Figure 8, substantially at a distance slightly different from or about equal to the thickness of the said reliefs 5.
The small semicircular recesses indicated by 6 in Figures 1, 2 and 3 are due to mould insert extractors which form the windows 1 in question and do not have a functional purpose.

From Figures 4, 5, 9 and 10 it can be seen that it is possible for a person mounting the door S to precision-fit, by means of snap-engagement and with ease, inside the windows 1 a ventilation grille 7 (Fig. 4) with slats 107 longitudinally parallel to the larger side of the said grille, suitably inclined in the transverse direction and parallel to each other, or a closing piece 8 (Fig. 5) made of transparent material. Both these components have a perimetral rim with a shape such as to mate, with minimum play, with the window 1 and a thickness indicated by F in Figures 8, 9 and 10, equal to the distance which is present between the externally visible sides of the rims 2 and 3. From Figure 10 it can be seen that the perimetral edge of the inserts 7 and 8 is characterized by having a continuous part 9 with the same height E indicated in Figure 8, which is suitably tapered or inclined, such that one side G of the said inserts 7 and 8 has a surface smaller than that of the opposite side. During mounting of the inserts 7 and 8, their side G must be directed towards the inside of the door S, so that said inserts may bear, for example printed thereon, information useful for the purpose, such as "Inside", "Outside", "In", "Out" or other information which can be correctly read from the outside when the insert is mounted inside the window 1 and which indicates, for example, the type of junction situated inside the box closed by the door in question, for example "Water", "Gas", "Electricity" or the name of the company supplying these services.

With the same arrangement as that envisaged for the reliefs 5 on the internal perimeter of the windows 1, the perimetral edge of the rim of the inserts 7 and 8, and more precisely that part of the perimetral edge which is not affected by the tapered part 9 (Fig. 10), is provided with recesses 10 having the same length as the said reliefs 5, all of which so that, as shown in the sequence of Figures 11 and 12, when positioning the insert 7 or 8 inside the window 1, so that it rests with its tapered perimetral part 9 against the reliefs 5, and pushing the said insert inside the window, as indicated by the arrow 11, the insert fits precisely into the said window and is retained inside it by snap-engagement of the reliefs 5 inside the recesses 10. Once mounted inside the window 1, the insert 7 or 8 rests with a large part of its perimeter on the bottom rim 3 and cannot be pushed beyond the latter, so as to thwart any attempt at breaking in. The insert 7 and 8 also engages fully and snugly with the window 1 and along its perimeter there is no play allowing the insertion of any break-in tools and, for this purpose, the outer edge 110 of the recesses 10 is suitably rounded. On the other hand, if the door S is open, it is easy to remove the insert 7 or 8 from the window 1 by exerting on the insert a minimum thrust outwards, opposite to that indicated by 11, such that it is possible at any time to fit the window with any one of these inserts 7 or 8 and arrange them correctly. The door is supplied with a package containing a transparent closing piece 8 and a ventilation grille 7, so that, depending on whether the door is to be arranged with the hinges on the left or on the right, the closing piece 8 may for example be arranged in that window 1 which is closest to the instrument which must be visible, for example in the upper window, while in the other window it possible to arrange the grille 7 inclined with its slats, from the top downwards, towards the outside, so as to prevent the entry of rain water. If the user has special requirements, it is possible to buy an additional package containing closing piece and grille, in order to arrange, in both the windows 1 of the door, two transparent closing pieces or two ventilation grilles.

It is understood that the scope of the invention includes any small variation relating to the door S, to the shape, to the quantity and to the arrangement of the windows and the corresponding inserts, whereby the latter may also be different from those illustrated.

## Claims

1. Ambidextrous door for closing inspection cabinets or wall boxes intended for example to contain the junctions of electricity, telephone, water or gas mains used in buildings or on building sites, **characterized in that**, during formation of the door (S) by means of plastic injection moulding, the door is provided with one or more windows (1) which have any suitable shape and are designed such that they may be closed, even at the time of mounting of the door, by snap-engaging special inserts which, depending on the requirements, may consist, for example, of grilles (7) which can be directed so that the slats are always able to prevent the entry of water through them, or closed inserts (8).

2. Door according to Claim 1, in which the said closed inserts (8) are made of transparent material, for viewing for example counters, remote control switches, relays or other means which are situated inside the box and are thus visible from the outside without having to open the door (S).

3. Door according to Claim 1, **characterized in that** the window or windows (1) and the associated inserts (7, 8) are designed so that the latter may be mounted in the said windows with ease, in a very secure and vandal-proof manner, so that they cannot be substantially removed from the outside but instead may be easily removed from the inside of the door.

4. Door according to Claim 1, in which the said window or windows (1) have the same shape, the same dimensions and the same functional characteristics, for example a rectangular shape, with the corners suitably rounded, and are arranged in position centred with respect to the vertical middle axis of the door and, if they are two in number, are positioned at a short distance from the horizontal sides of the door and parallel to the said sides.

5. Door according to Claim 1, in which each window (1) may be circumscribed on the front or outer side of the door by a small and continuous raised rim (2), while on the rear side the window (1) is circumscribed by a wider raised rim (3) which partly projects inside the said window (1) so as to act as a support for the insert later inserted in this window and which is substantially coplanar with and joined to the rear ribs (B) of the door.

6. Door according to Claim 5), in which the rear rim (3) is not continuous in that it has short gaps (4) of the same length in the centre of the short sides and the long sides which also have similar gaps in zones symmetrically spaced from the central gap.

7. Door according to Claim 6, in which the said gaps (4) provided on the rear rim (3) have a length of about 10-15 mm, for example about 12 mm, and on the long sides of the windows are spaced from each other at an interval of about 50-52 mm.

8. Door according to Claim 6, in which the said gaps (4) provided on the rear rim (3) have the function of allowing through the parts of the mould which form on the internal perimeter of each window (1), small parallelepiped-shaped reliefs (5) which are parallel to the said rim (3) and have the same length as the said gaps (4) and the outer side of which is substantially coplanar with the outer side of the door (S), while their side directed towards the rear rim (3) is spaced from the latter by an amount (E) about equal to or slightly different from the thickness of the said reliefs (5).

9. Door according to Claim 1, in which the inserts (7, 8) able to be seated inside the said windows (1) have a perimetral rim with a shape such as to mate, with minimum play, with the said window (1), with a thickness (F) substantially equal to the distance which is present between the externally visible sides of the said front and rear rims (2, 3) and the perimetral edge of this rim has a continuous part (9) with a height equal to the distance (E) which is present between the side of the said perimetral reliefs (5) of the window (1) and the rear rim (3) of the latter, and is suitably tapered or inclined, so that one side (G) of the said inserts (7, 8) has a surface smaller than that of the opposite side, it being envisaged that with this side (G) the inserts are directed towards the inside of the door (S) when they must be mounted inside the window.

10. Door according to Claim 9, in which the inserts (7, 8) may bear, on one or both their sides, information which facilitates mounting thereof, such as for example "Inside", "Outside", "In", "Out" or other information which can be correctly read from the outside when the insert is mounted inside the window and which for example indicates the type of junction situated inside the box closed by the door in question, for example "Water", "Gas", "Electricity" or the name of the company which supplies these services.

11. Door according to Claim 9, **characterized in that** with the same arrangement as that envisaged for the reliefs (5) on the internal perimeter of the windows (1), the external perimeter of the inserts (7, 8), and more precisely that part of the perimetral edge of these inserts which is not affected by the tapered part (9), is provided with recesses (10) which have a rounded outer edge (110) and have the same length as the said reliefs (5), all of which so that, when positioning the insert (7 or 8) inside the window (1), so that it rests with its tapered perimetral part (9) against the reliefs (5), and pushing the said insert inside the window, it fits precisely into the said window and is retained inside it by snap-engagement of the reliefs (5) inside the recesses (10), while the said insert engages fully and snugly with the said window (1) and along its perimeter there is no play allowing the insertion of any break-in tools.

12. Door according to Claim 11, **characterized in that**, once mounted inside the window (1), the insert (7, 8) rests with a large part of its perimeter on the bottom rim (3) of the said window and cannot be pushed beyond the latter, so as to thwart any attempt at breaking in from the outside, while, if the door (S) is open, it is easy to remove the insert (7 or 8) from the window (1), by exerting on the insert a minimum thrust outwards, such that it is possible to fit the window with any one of the inserts available and arrange them correctly at any time.

13. Door according to Claim 4, **characterized in that** the door is supplied with a package containing a transparent closing piece (8) and a ventilation grille (7) so that, depending on whether the door is to be arranged with its hinges (C) on the left or on the right, the said closing piece (8) may be arranged **in that** window (1) which is closest to the instrument which is situated inside the box and must be visible from the outside, for example in the upper window, while the ventilation grille (7) may be arranged in the other window (1) with its slats inclined, from the top downwards, towards the outside, so as to prevent the entry of rain water.

14. Door according to Claim 13, in which the said packages with the grille (7) and the transparent insert (8) may also be sold separately from the said door so that, if the user has special requirements, he/she may arrange two transparent closing pieces (8) or two ventilation grilles (7) inside the windows of a same door.
